# EUROPEAN PATENT APPLICATION

(11) **EP 4 366 411 A1**
(43) Date of publication of application: **08.05.2024**
(21) Application number: 22853424.4
(22) Date of filing: 02.08.2022
(51) Int. Cl.: H04W 72/02, H04W 72/04, H04W 72/12, H04W 28/26, H04W 92/18

(54) **METHOD AND DEVICE FOR REQUESTING AND TRANSMITTING INTER-UE COORDINATION INFORMATION IN SIDELINK COMMUNICATION**

(30) Priority: 04.08.2021 KR 20210102799
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HONG, Ui Hyun, Hwaseong-si, Gyeonggi-do 18280 (KR); HAHN, Gene Back, Hwaseong-si, Gyeonggi-do 18280 (KR); SON, Hyuk Min, Iksan-si, Jeollabuk-do 54653 (KR)
(74) Representative: Isarpatent
(86) International application number: PCT/KR2022/011395
(87) International publication number: WO 2023/014047

(57) **Abstract**

Disclosed are a method and device for requesting and transmitting inter-UE coordination information in sidelink communication. The method of a first UE comprises the steps of: generating a first signaling message including a first information element indicating a request for transmission of inter-UE coordination information; transmitting the first signaling message; during a first time interval from the time point of transmission of the first signaling message, carrying out an operation for receiving a second signaling message including the inter-UE coordination information; and if the second signaling message is received, carrying out sidelink communication on the basis of the inter-UE coordination information included in the second signaling message.

## Description

### [Technical Field]

The present disclosure relates to a sidelink communication technique, and more particularly, to a technique for requesting and transmitting inter-user equipment (UE) coordination information.

### [Background Art]

A fifth-generation (5G) communication system (e.g. New Radio (NR) communication system) which uses a frequency band higher than a frequency band of a fourth-generation (4G) communication system (e.g. Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g. C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g. C-V2X communications) may be performed based on sidelink communication technologies (e.g. Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g. periodic sidelink data) may be transmitted using the CG resources.

Meanwhile, sidelink communication may be performed based on a resource allocation (RA) mode 1 or RA mode 2. When the RA mode 1 is used, a base station may allocate resources for sidelink communication to a user equipment (UE), and the UE may perform sidelink communication using the resources allocated by the base station. When the RA mode 2 is used, the UE may determine resources for sidelink communication by performing a resource sensing operation and/or a resource selection operation, and may perform sidelink communication using the determined resources.

Power consumption by performing the resource sensing operation and/or resource selection operation may be large. In a UE with limited power capacity, a UE with limited resource sensing capability, and/or a UE with limited resource selection capability, the resource sensing operation and/or resource selection operation may not be performed normally. Additionally, the efficiency of resource allocation according to the RA mode 2 may be reduced due to a hidden node problem, exposed node problem, and/or half-duplex problem. To solve the above-described problem, methods for performing the resource sensing operation and/or resource selection operation based on assistance of nearby UEs are needed.

### [Disclosure]

### [Technical Problem]

The present disclosure is directed to providing a method and an apparatus for requesting and transmitting inter-user equipment (UE) coordination information in sidelink communication.

### [Technical Solution]

A method of a first user equipment (UE), according to a first exemplary embodiment of the present disclosure for achieving the above-described objective, may comprise: generating a first signaling message including a first information element indicating a transmission request for inter-UE coordination information; transmitting the first signaling message; performing a reception operation of a second signaling message including the inter-UE coordination information during a first time period from a time of transmitting the first signaling message; and in response to receiving the second signaling message, performing sidelink communication in consideration of the inter-UE coordination information included in the second signaling message, wherein when the second signaling message is not received during the first time period, the sidelink communication is performed without considering the inter-UE coordination information.

The first signaling message may be transmitted in a unicast scheme, a groupcast scheme, or a broadcast scheme, the first signaling message may be generated based on a UE-specific identifier (ID) when the first signaling message is transmitted in the unicast scheme, the first signaling message may be generated based on a group-specific ID when the first signaling message is transmitted in the groupcast scheme, and the first signaling message may be generated based on an ID for broadcast transmission when the first signaling message is transmitted in the broadcast scheme.

The first signaling message may further include information on a time offset indicating the first time period.

The method may further comprise: receiving information on a time offset indicating the first time period from a base station to which the first UE is connected.

The first signaling message may be transmitted to each of a second UE and a third UE, and the first signaling message transmitted to the second UE and the first signaling message transmitted to the third UE may include same information elements or different information elements.

The first signaling message may further include a second information element indicating a transmission scheme of the second signaling message including the inter-UE coordination information.

The transmission scheme may be classified into a first transmission scheme and a second transmission scheme, the second signaling message may be transmitted if the inter-UE coordination information exists when the first transmission scheme is used, and the second signaling message may be transmitted if a preconfigured condition is satisfied when the second transmission scheme is used.

The preconfigured condition may be a condition in which a distance between the first UE and a second UE receiving the first signaling message is less than a first threshold, or a condition in which a received strength of the first signaling message received at the second UE is greater than or equal to a second threshold.

The first signaling message may further include a third information element indicating a transmission resource of the second signaling message, and the transmission resource may be a physical sidelink feedback channel (PSFCH) resource or a resource sensed by the first UE.

When the second signaling message is transmitted using the PSFCH resource, the second signaling message may include acknowledgment (ACK) information or negative ACK (NACK) information, and each of the ACK information and the NACK information may indicate preferred resources, non-preferred resources, expected/potential resource conflict, or detected resource conflict indicated by the first signaling message.

A method of a second user equipment (UE), according to a second exemplary embodiment of the present disclosure for achieving the above-described objective, may comprise: receiving, from a first UE, a first signaling message including a first information element indicating a transmission request for inter-UE coordination information and a second information element indicating a transmission scheme of the inter-UE coordination information; in response to satisfying a condition according to the transmission scheme, generating the inter-UE coordination information according to the transmission request; and transmitting, to the first UE, a second signaling message including the inter-UE coordination information.

The condition may be a condition in which a distance between the first UE and the second UE is less than a first threshold, or a condition in which a received strength of the first signaling message is equal to or greater than a second threshold.

The first signaling message may further include a third information element indicating a transmission resource of the second signaling message, and the transmission resource may be a physical sidelink feedback channel (PSFCH) resource or a resource sensed by the first UE.

When the second signaling message is transmitted using the PSFCH resource, the second signaling message may include acknowledgment (ACK) information or negative ACK (NACK) information, and each of the ACK information and the NACK information may indicate preferred resources, non-preferred resources, expected/potential resource conflict, or detected resource conflict indicated by the first signaling message.

The first signaling message may further include information on a time offset, and the second signaling message may be transmitted within a time period corresponding to the time offset from a time of receiving the first signaling message.

The first signaling message may be transmitted in a unicast scheme, a groupcast scheme, or a broadcast scheme, the first signaling message may be received based on a UE-specific identifier (ID) when the first signaling message is transmitted in the unicast scheme, the first signaling message may be received based on a group-specific ID when the first signaling message is transmitted in the groupcast scheme, and the first signaling message may be received based on an ID for broadcast transmission when the first signaling message is transmitted in the broadcast scheme.

A first user equipment (UE), according to a third exemplary embodiment of the present disclosure for achieving the above-described objective, may comprise: a processor; and a memory storing one or more instructions executable by the processor, and the one or more instructions may be executed to perform: generating a first signaling message including a first information element indicating a transmission request for inter-UE coordination information; transmitting the first signaling message; performing a reception operation of a second signaling message including the inter-UE coordination information during a first time period from a time of transmitting the first signaling message; and in response to receiving the second signaling message, performing sidelink communication in consideration of the inter-UE coordination information included in the second signaling message, wherein when the second signaling message is not received during the first time period, the sidelink communication is performed without considering the inter-UE coordination information.

Information on a time offset indicating the first time period may be included in the first signaling message or may be configured by a base station to which the first UE is connected.

The first signaling message may further include a second information element indicating a transmission scheme of the second signaling message including the inter-UE coordination information, the transmission scheme may be classified into a first transmission scheme and a second transmission scheme, the second signaling message may be transmitted if the inter-UE coordination information exists when the first transmission scheme is used, and the second signaling message may be transmitted if a preconfigured condition is satisfied when the second transmission scheme is used.

The first signaling message may further include a third information element indicating a transmission resource of the second signaling message, the transmission resource may be a physical sidelink feedback channel (PSFCH) resource or a resource sensed by the first UE, and when the second signaling message is transmitted using the PSFCH resource, the second signaling message may include acknowledgment (ACK) information or negative ACK (NACK) information, and each of the ACK information and the NACK information may indicate preferred resources, non-preferred resources, expected/potential resource conflict, or detected resource conflict indicated by the first signaling message.

### [Advantageous Effects]

According to the present disclosure, a first signaling message indicating a request for transmission of inter-UE coordination information may be transmitted in a unicast, groupcast, or broadcast scheme. A UE-B receiving the first signaling message may transmit a second signaling message including inter-UE coordination information when a preconfigured condition is satisfied. A resource through which the second signaling message is transmitted may be indicated by the first signaling message. According to the above-described operations, the inter-UE coordination information can be transmitted and received efficiently, and the performance of the communication system can be improved.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a sidelink communication method.
FIG. 8 is a sequence chart illustrating a second exemplary embodiment of a sidelink communication method.
FIG. 9 is a sequence chart illustrating a third exemplary embodiment of a sidelink communication method.
FIG. 10 is a sequence chart illustrating a fourth exemplary embodiment of a sidelink communication method.
FIG. 11 is a sequence chart illustrating a fifth exemplary embodiment of a sidelink communication method.
FIG. 12 is a timing diagram illustrating a first exemplary embodiment of a data transmission method.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, '(re)transmission' may refer to 'transmission', 'retransmission', or 'transmission and retransmission', '(re)configuration' may refer to 'configuration', `reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

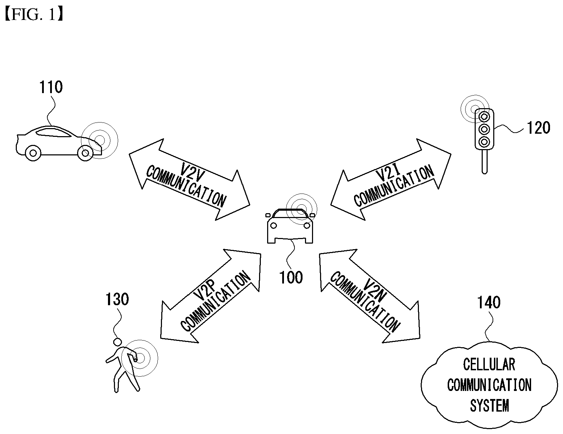

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g. a cellular communication system 140), and the V2X communications supported by the cellular communication system 140 may be referred to as "Cellular-V2X (C-V2X) communications." Here, the cellular communication system 140 may include the 4G communication system (e.g. LTE communication system or LTE-A communication system), 5G communication system (e.g. NR communication system), and the like.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g. a cellular communication system 140), and the V2X communications supported by the cellular communication system 140 may be referred to as "Cellular-V2X (C-V2X) communications." Here, the cellular communication system 140 may include the 4G communication system (e.g. LTE communication system or LTE-A communication system), 5G communication system (e.g. NR communication system), 6G communication system, and the like.

The V2V communications may include communications between a first vehicle 100 (e.g. a communication node located in the vehicle 100) and a second vehicle 110 (e.g. a communication node located in the vehicle 110). Various driving information such as velocity, heading, time, position, and the like may be exchanged between the vehicles 100 and 110 through the V2V communications. For example, autonomous driving (e.g. platooning) may be supported based on the driving information exchanged through the V2V communications. The V2V communications supported in the cellular communication system 140 may be performed based on "sidelink" communication technologies (e.g. ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g. the communication node located in the vehicle 100) and an infrastructure (e.g. road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g. ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g. the communication node located in the vehicle 100) and a person 130 (e.g. a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g. ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g. the communication node located in the vehicle 100) and a server connected through the cellular communication system 140. The V2N communications may be performed based on the 4G communication technology (e.g. LTE or LTE-A) or the 5G communication technology (e.g. NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

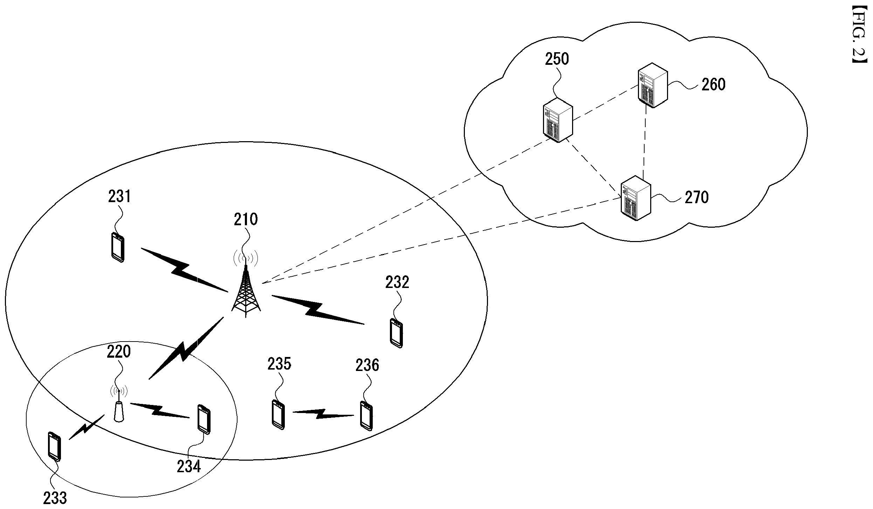

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g. a V2V network slice, a V2I network slice, a V2P network slice, a V2N network slice, etc.) may be configured, and the V2X communications may be supported through the V2X network slice configured in the core network.

The communication nodes (e.g. base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g. base station, relay, UE, S-GW, P-GW, MME, UPF, SMF, AMF, etc.) comprising the cellular communication system may be configured as follows.

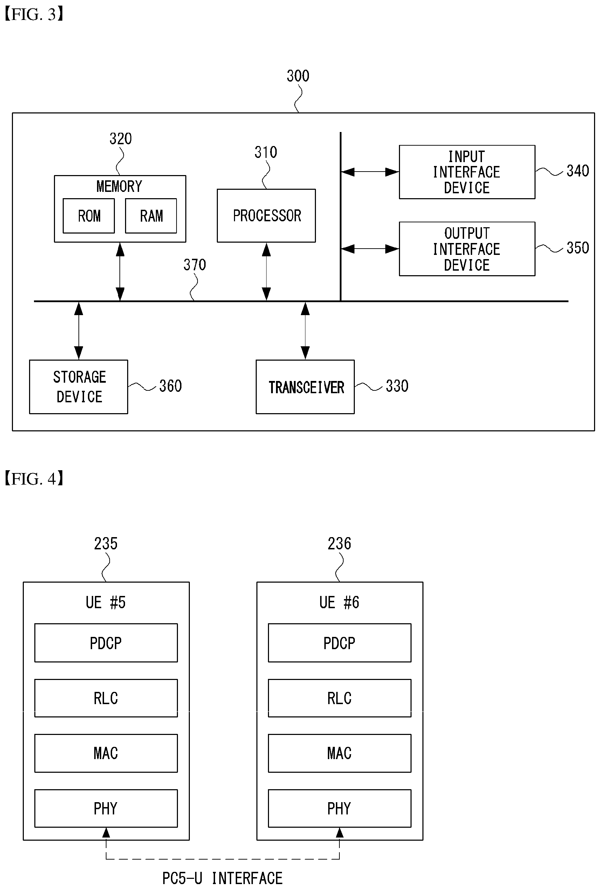

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a nonvolatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g. single user (SU)-MIMO, multi-user (MU)-MIMO, massive MIMO, etc.), coordinated multipoint (CoMP) communication technologies, carrier aggregation (CA) communication technologies, unlicensed band communication technologies (e.g. Licensed Assisted Access (LAA), enhanced LAA (eLAA), etc.), sidelink communication technologies (e.g. ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g. the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g. the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g. PC5-U interface). A layer-2 identifier (ID) (e.g. a source layer-2 ID, a destination layer-2 ID) may be used for the sidelink communications, and the layer 2-ID may be an ID configured for the V2X communications (e.g. V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g. the UEs 235 and 236) performing sidelink communications may be configured as follows.

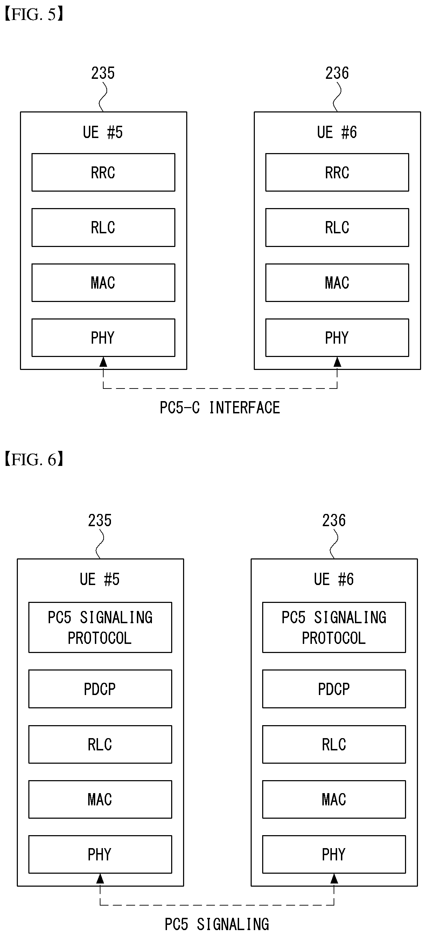

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g. Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g. PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g. UE 235 or 236) by a higher layer signaling. The PSCCH may be used for transmitting and receiving sidelink control information (SCI) and may also be configured in the UE (e.g. UE 235 or 236) by a higher layer signaling.

The PSDCH may be used for a discovery procedure. For example, a discovery signal may be transmitted over the PSDCH. The PSBCH may be used for transmitting and receiving broadcast information (e.g. system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g. a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g. UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g. UE 235 or 236) within the resource pool configured by the dedicated RRC signaling procedure or the broadcast RRC signaling procedure.

Hereinafter, sidelink communication methods will be described. Even when a method (e.g. transmission or reception of a signal) to be performed at a first communication node among communication nodes is described, a corresponding second communication node may perform a method (e.g. reception or transmission of the signal) corresponding to the method performed at the first communication node. That is, when an operation of a UE #1 (e.g. vehicle #1) is described, a UE #2 (e.g. vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g. sidelink data transmission, sidelink-shared channel (SL-SCH) transmission) may be performed based on one SCI (e.g. 1st-stage SCI). When the multi-SCI scheme is used, data transmission may be performed using two SCIs (e.g. 1st-stage SCI and 2nd-stage SCI). The SCI(s) may be transmitted on a PSCCH and/or a PSSCH. When the single-SCI scheme is used, the SCI (e.g. 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements. The SCI format 2-C may be used for decoding of a PSSCH and/or providing inter-UE coordination information.

In exemplary embodiments, configuration of an operation (e.g. transmission operation) may mean that configuration information (e.g. information element(s), parameter(s)) for the operation and/or information indicating to perform the operation is signaled. Configuration of information element(s) (e.g. parameter(s)) may mean that the information element(s) are signaled. The signaling may be at least one of system information (SI) signaling (e.g. transmission of a system information block (SIB) and/or master information block (MIB)), RRC signaling (e.g. transmission of RRC parameters and/or higher layer parameters), MAC control element (CE) signaling, or PHY signaling (e.g. transmission of downlink control information (DCI), uplink control information (UCI), and/or sidelink control information (SCI)). Here, the MAC CE signaling operation may be performed through a data channel, the PHY signaling operation may be performed through a control channel or a data channel, and transmission of SCI may mean transmission of first-stage SCI and/or second-stage SCI.

In exemplary embodiments, a UE-A may refer to a UE that transmits inter-UE coordination information to a UE-B. The UE-A may be referred to as a first UE or a second UE. The UE-A may transmit inter-UE coordination information to the UE-B according to an explicit request of the UE-B. Alternatively, the UE-A may transmit inter-UE coordination information to the UE-B when a condition(s) configured by higher layer signaling is satisfied. The UE-B may refer to a UE that receives inter-UE coordination information from the UE-A. The UE-B may be referred to as a first UE or a second UE. If a request procedure for inter-UE coordination information is enabled, the UE-B may transmit a request for inter-UE coordination information to the UE-A. If a request procedure for inter-UE coordination information is not enabled, the UE-B may receive inter-UE coordination information the from UE-A without requesting the inter-UE coordination information. That is, if a preconfigured condition(s) is satisfied in the UE-A, the UE-B may receive inter-UE coordination information from the UE-A.

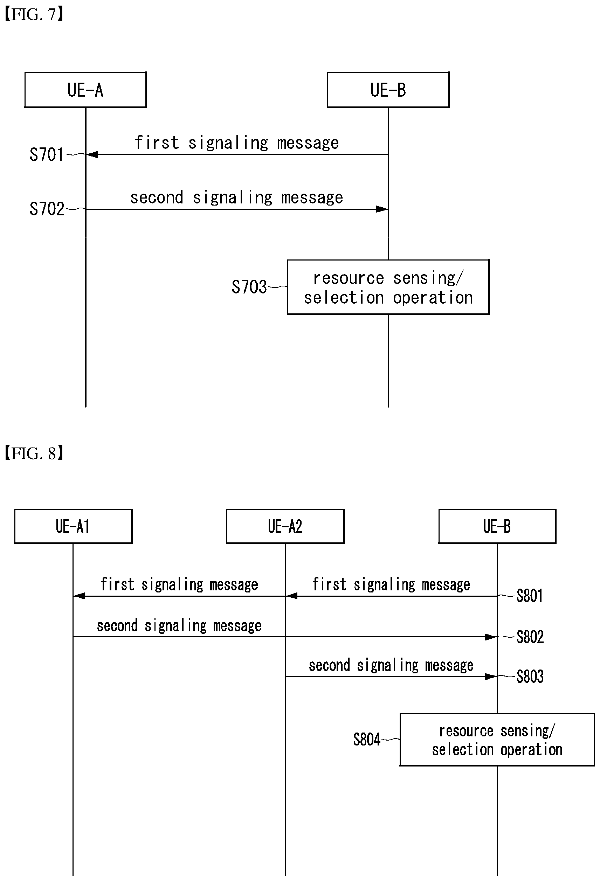

FIG. 7 is a sequence chart illustrating a first exemplary embodiment of a sidelink communication method.

As shown in FIG. 7, a communication system may include a UE-A and UE-B, and sidelink communication may be performed based on the resource allocation (RA) mode 2. The RA mode 2 may be the sidelink TM 2 or 4 specified in Table 2. The UE-A may transmit information helpful for resource selection (e.g. inter-UE coordination information) to the UE-B. The UE-B may perform a resource sensing operation and/or resource selection operation for sidelink communication. The UE-B may perform the resource sensing and/or resource selection operation based on the inter-UE coordination information received from the UE-A.

Although FIG. 7 illustrates sidelink communication between one UE-A and one UE-B, the exemplary embodiment of FIG. 7 may be applied to sidelink communication between a plurality of UE-As (e.g. a UE-A group including one or more UE-As) and one UE-B, sidelink communication between a plurality of UE-Bs (e.g. a UE-B group including one or more UE-Bs) and one UE-A, and/or sidelink communication between a plurality of UE-As (e.g. UE-A group) and a plurality of UE-Bs (e.g. UE-B group). In sidelink communication between a plurality of UE-As and one UE-B, one UE-B may transmit a plurality of first signaling messages to the plurality of UE-As, and may receive a second signaling message from each of the plurality of UE-As. In sidelink communication between one UE-A and a plurality of UE-Bs, one UE-A may receive a first signaling message from each of the plurality of UE-Bs, and transmit a second signaling message to each of the plurality of UE-Bs.

The UE-B may generate the first signaling message, which is a signal requesting provision of inter-UE coordination information, and transmit the first signaling message to the UE-A (S701). The step S701 may be performed when an explicit request procedure for inter-UE coordination information is enabled by higher layer signaling. The first signaling message may be a first-stage SCI and/or a second-stage SCI (e.g. SCI format 2-C). The first signaling message may be transmitted on a PSCCH and/or PSSCH. The first signaling message (e.g. first-stage SCI and/or second-stage SCI) may include a providing/requesting indicator indicating provision of or request for inter-UE coordination information. The size of the providing/requesting indicator may be 1 bit.

The providing/requesting indicator set to '0' may indicate that the corresponding SCI (e.g. SCI format 2-C) is used to provide inter-UE coordination information. The providing/requesting indicator set to '1' may indicate that the corresponding SCI (e.g. SCI format 2-C) is used to request inter-UE coordination information. In the step S701, the providing/requesting indicator included in the first signaling message may be set to 1, and in the step S702, the providing/requesting indicator included in the second signaling message may be set to 0. A reserved bit(s) in the first signaling message (e.g. first-stage SCI or second-stage SCI) may be used to express the providing/requesting indicator. Alternatively, a new first-stage SCI and/or a new second-stage SCI may be defined to request provision of inter-UE coordination information.

In addition, the first signaling message may further include a resource set type (e.g. type of resource information). The size of the resource set type may be 1 bit. The resource set type set to 0 may indicate a preferred resource set. In this case, the first signaling message may request provision of preferred resource set information (e.g. preferred resource information). The resource set type set to 1 may indicate a non-preferred resource set. In this case, the first signaling message may request provision of non-preferred resource set information (e.g. non-preferred resource information). According to a combination of the providing/requesting indicator and the resource set type included in the first signaling message, a request for inter-UE coordination information indicating a preferred resource set or a request for inter-UE coordination information indicating a non-preferred resource set may be indicated. In exemplary embodiments, a preferred resource set and preferred resources may be used with the same meaning, and a non-preferred resource set and non-preferred resources may be used with the same meaning.

The UE-A may receive the first signaling message (e.g. SCI format 2-C) from the UE-B and identify the providing/requesting indicator included in the first signaling message. If the providing/requesting indicator indicates a request for inter-UE coordination information, the UE-A may transmit a second signaling message including inter-UE coordination information to the UE-B (S702). The step S702 may be performed based on the UE-B's request for inter-UE coordination information. Alternatively, if an explicit request procedure for inter-UE coordination information is not enabled by higher layer signaling, the UE-A may transmit inter-UE coordination information to the UE-B without the UE-B's request for inter-UE coordination information. In this case, the UE-A may transmit inter-UE coordination information to the UE-B when a condition(s) configured by higher layer signaling is satisfied.

If the resource set type included in the first signaling message indicates a preferred resource set, the UE-A may determine a preferred resource set (e.g. preferred resources), and may generate inter-UE coordination information including information element(s) indicating the preferred resource set. The preferred resource set may be determined within a resource region (e.g. time resource, frequency resource, resource pool). The resource region within which the preferred resource set is determined may be configured to the UE(s) by higher layer signaling of the base station. Alternatively, information element(s) indicating the resource region within which the preferred resource set is determined may be included in the UE-B's first signaling message (e.g. SCI format 2-C). The time resource may be a resource reservation period. The frequency resource may be one or more subchannels.

If the resource set type included in the first signaling message indicates a non-preferred resource set, the UE-A may determine a non-preferred resource set (e.g. non-preferred resources), and may generate inter-UE coordination information including information element(s) indicating the non-preferred resource set. The non-preferred resource set may be determined within a resource region (e.g. time resource, frequency resource, resource pool). The resource region within which the non-preferred resource set is determined may be configured to the UE(s) by higher layer signaling of the base station. Alternatively, information element(s) indicating the resource region within which the non-preferred resource set is determined may be included in the UE-B's first signaling message (e.g. SCI format 2-C). The time resource may be a resource reservation section. The frequency resource may be one or more subchannels.

The second signaling message may include inter-UE coordination information including information element(s) indicating a preferred resource set or a non-preferred resource set. The second signaling message may be a first-stage SCI and/or a second-stage SCI (e.g. SCI format 2-C). The second signaling message may include the providing/requesting indicator indicating provision of inter-UE coordination information and the resource set type.

The UE-B may receive the second signaling message from the UE-A and identify the inter-UE coordination information included in the second signaling message. For example, if the providing/requesting indicator included in the second signaling message indicates provision of inter-UE coordination information, the UE-B may perform a decoding operation to obtain the inter-UE coordination information from the second signaling message. If the resource set type included in the second signaling message indicates a preferred resource set, the UE-B may determine that the inter-UE coordination information obtained from the second signaling message indicates a preferred resource type. If the resource set type included in the second signaling message indicates a non-preferred resource set, the UE-B may determine that the inter-UE coordination information obtained from the second signaling message indicates a non-preferred resource type. The UE-B may perform a resource sensing/selection operation by considering the inter-UE coordination information (S703). In exemplary embodiments, the resource sensing/selection operation may include a resource sensing operation and/or a resource selection operation.

The inter-UE coordination information may include information element(s) indicating a preferred resource set and/or a non-preferred resource set. The UE-B may select resource(s) within the preferred resource set by performing a resource sensing/selection operation, and perform sidelink communication using the selected resource(s). Alternatively, the UE-B may select resource(s) other than the non-preferred resource set by performing a resource sensing/selection operation, and perform sidelink communication using the selected resource(s).

The above-described first signaling message may include at least one of resource pool (RP) information, time resource information, or frequency resource information. The RP information may indicate a Tx RP allocated to the UE-B. The Tx RP of the UE-B may be configured by the base station. The time resource information may indicate a time resource sensed by the UE-B or a time resource reserved by the UE-B for data transmission. The time resource indicated by the time resource information may be a time resource within the Tx RP allocated to the UE-B. The UE-A can determine a preferred resource or non-preferred resource within the time resource indicated by the time resource information. The time resource information may indicate a resource reservation period.

The frequency resource information may indicate a frequency resource sensed by the UE-B or a frequency resource reserved by the UE-B for data transmission. The frequency resource indicated by the frequency resource information may be a frequency resource within the Tx RP allocated to the UE-B. The UE-B may determine a preferred resource or non-preferred resource within the frequency resource indicated by the frequency resource information. The frequency resource may be configured on a subchannel basis, and the frequency resource information may indicate the number of subchannels.

The first signaling message may include information element(s) indicating all or part of the resources sensed by the UE-B. The first signaling message may include information element(s) indicating all or part of the resources reserved by the UE-B. The resource information included in the first signaling message may indicate a resource region randomly selected by the UE-B. The resource information included in the first signaling message may indicate a resource region (e.g. resource window) in which the UE-B performs resource sensing/selection operations. The resource information included in the first signaling message may indicate a resource region preferred by the UE-B or a resource region not preferred by the UE-B.

The first signaling message may include one or more indication information defined in Table 3 below.

**[Table 3]**

| | **First value** | **Second value** |
|---|---|---|
| Indication information #1 | request | Non-request or provision |
| Indication information #2 | Inter-UE coordination scheme 1 | Inter-UE coordination scheme 2 |
| Indication information #3 (when indication information #2 is set to a first value) | Preferred resources | Non-preferred resources |
| Indication information #3 (when indication information #2 is set to a second value) | Expected/potential resource conflict | Detected resource conflict |

The size of each of the indication information #1, indication information #2, and indication information #3 may be 1 bit. The indication information #1, indication information #2, and indication information #3 may each have a first value or a second value. Each of the first value and the second value may be 0 or 1. For example, if the first value is 0, the second value may be 1. If the first value is 1, the second value may be 0. The indication information #1 may indicate whether the first signaling message (e.g. SCI format 2-C) including the corresponding indication information #1 is an inter-UE coordination request signal. The inter-UE coordination request signal may be a signal requesting inter-UE coordination information. Alternatively, the indication information #1 may indicate whether the first signaling message (e.g. SCI format 2-C) including the corresponding indication information #1 requests inter-UE coordination information. The indication information #1 set to the first value may indicate that the first signaling message transmitted by the UE-B is an inter-UE coordination request signal. The indication information #1 set to the second value may indicate that the first signaling message transmitted by the UE-B is not an inter-UE coordination request signal. The indication information #1 may be the above-described providing/requesting indicator.

The indication information #2 may indicate use of an inter-UE coordination scheme 1 or inter-UE coordination scheme 2. The indication information #2 may be transmitted when both the inter-UE coordination scheme 1 and inter-UE coordination scheme 2 are available.

Whether to use the inter-UE coordination scheme 1 and/or inter-UE coordination scheme 2 may be configured by higher layer signaling. When only one of the inter-UE coordination scheme 1 and inter-UE coordination scheme 2 is available or when one of the inter-UE coordination scheme 1 and inter-UE coordination scheme 2 is configured to be used, the indication information #2 may not be transmitted. The inter-UE coordination scheme 1 may be used to indicate preferred resources (e.g. preferred resource set) or non-preferred resources (e.g. non-preferred resource set). The inter-UE coordination scheme 2 may be used to indicate an expected/potential resource conflict or detected resource conflict. The indication information #2 set to the first value may indicate use (or request) of the inter-UE coordination scheme 1. The indication information #2 set to the second value may indicate use (or request) of the inter-UE coordination scheme 2.

When there are multiple types of inter-UE coordination information that UE-B can request (e.g. when there are multiple resource types (e.g. resource set types) that can be indicated by inter-UE coordination information), the indication information #3 may be used to indicate a request for one inter-UE coordination information (e.g. one resource type, one resource set type). The indication information #3 may indicate inter-UE coordination information according to the inter-UE coordination scheme indicated by the indication information #2. When the indication information #2 is set to the first value, the indication information #3 set to the first value may indicate a request for preferred resources (e.g. preferred resource set), and the indication information #3 set to the second value may indicate a request for non-preferred resources (e.g. non-preferred resource set). When the indication information #2 is set to the second value, the indication information #3 set to the first value may indicate a request for expected/potential resource conflict information, and the indication information #3 set to the second value may indicate a request for detected resource conflict information. When the indication information #2 is not used, the indication information #3 may indicate a request for inter-UE coordination information (e.g. preferred resource set or non-preferred resource set) according to the inter-UE coordination scheme 1. The indication information #3 may be the resource set type described above.

The first signaling message may include information on a resource used by the UE-A for transmission of inter-UE coordination information. The first signaling message may include some indication information defined in Table 3. All or part of the indication information defined in Table 3 may be configured by higher layer signaling, MAC signaling, or PHY signaling. All or part of the indication information defined in Table 3 may be operated as fixed configuration. The use (or transmission) of each indication information defined in Table 3 may be enabled or disabled by higher layer signaling. For example, when the use of the indication information #1 and #3 is enabled by higher layer signaling, and the use of the indication information #2 is disabled by higher layer signaling, the first signaling message may include the indication information #1 and #3, and may not include the indication information #2. 'The use (or transmission) of the indication information #1 is enabled by higher layer signaling' may mean 'a request for inter-UE coordination information is explicitly indicated'. 'The use (or transmission) of the indication information #1 is disabled by higher layer signaling (e.g. the use (or transmission) of the indication information #1 is not enabled by higher layer signaling)' may mean 'a request for inter-UE coordination information is implicitly indicated'.

The indication information #1 may be indicated in an implicit manner in addition to an explicit manner. When the indication information #1 is indicated in an implicit manner, and preconfigured condition(s) are satisfied, the UE-A may transmit a second signaling message (e.g. SCI format 2- C) including inter-UE coordination information to the UE-B.

### [Transmission scheme of first signaling message]

The first signaling message may be transmitted based on an SL transmission scheme: unicast scheme, groupcast scheme, and/or broadcast scheme. When the unicast scheme is used, the UE-B may transmit the first signaling message to the UE-A that is a specific UE. In this case, in order to specify (e.g. indicate) that the first signaling message is a message for the UE-A, a sequence used for the first signaling message (e.g. scrambling sequence, sequence for cyclic redundancy check (CRC) masking) may be generated based on a UE-specific identifier (ID). That is, the UE-B may generate a sequence using a UE-specific ID and may generate the first signaling message using the sequence. The UE-A may perform a reception operation for the first signaling message using the UE-specific ID.

FIG. 8 is a sequence chart illustrating a second exemplary embodiment of a sidelink communication method.

As shown in FIG. 8, a communication system may include a UE-A1, UE-A2, and UE-B. The UE-A1 and UE-A2 may be configured as a UE group (e.g. group-A). The UE group may include a plurality of UE-As (e.g. UE-A1 and UE-A2) that receive the first signaling message from the UE-B. In order to specify (e.g. indicate) that the first signaling message is a message for a specific group, a sequence (e.g. scrambling sequence, sequence for CRC masking) used for the first signaling message may be generated based on a UE-specific ID or a group-specific ID.

The group-specific ID may be configured by the UE-B or the base station. The UE-B or base station may determine one or more UE-As belonging to the UE group, may configure a group-specific ID for the UE group, and inform the group-specific ID to the UE(s) (e.g. UE-As belonging to the UE group) through at least one of higher layer signaling, MAC signaling, or PHY signaling. The UE-A(s) may obtain the group-specific ID from the UE-B or the base station. The UE-A(s) may perform a reception operation for the first signaling message using the group-specific ID.

The UE-B may generate a sequence based on the group-specific ID and generate the first signaling message based on the sequence. The UE-B may transmit the first signaling message indicating a request for transmission of inter-UE coordination information (S801). In the step S801, the first signaling message may be transmitted in the groupcast scheme or broadcast scheme. Each of the UE-A1 and UE-A2 belonging to the UE group may perform a reception operation for the first signaling message using the group-specific ID. When the first signaling message is received from the UE-B, the UE-A1 may generate a second signaling message including inter-UE coordination information #1 and transmit the second signaling message to the UE-B (S802). When the first signaling message is received from the UE-B, the UE-A2 may generate a second signaling message including inter-UE coordination information #2 and transmit the second signaling message to the UE-B (S803).

The UE-B may receive the second signaling messages from the UE group (e.g. UE-A1 and/or UE-A2), and may obtain the inter-UE coordination information (e.g. inter-UE coordination information #1 and/or inter-UE coordination information #2) included in the second signaling messages. The UE-B may perform a resource sensing/selection operation by considering the inter-UE coordination information #1 and/or inter-UE coordination information #2 (S804). The UE-B may perform sidelink communication using resources determined in the step S804.

Meanwhile, when the broadcast scheme is used, the UE-B may transmit a first signaling message requesting transmission of inter-UE coordination information to unspecified UE-A(s). In order to specify (e.g. indicate) that the first signaling message is a message transmitted in the broadcast scheme, a sequence used for the first signaling message (e.g. scrambling sequence, sequence for CRC masking) may be generated based on a specific ID. The specific ID may be a cell-specific ID, a resource pool (RP)-specific ID, and/or a UE-B-specific ID. The UE-B-specific ID may be a specific ID for the UE-B transmitting the first signaling message.

The specific ID may be configured by the UE-B or base station. The UE-B or the base station may configure the specific ID for broadcast transmission and inform the UE(s) of the specific ID using at least one of higher layer signaling, MAC signaling, or PHY signaling. The UE-A(s) may obtain the specific ID from the UE-B or the base station. The UE-A(s) may perform a reception operation for the first signaling message by using the specific ID.

When the unicast scheme, groupcast scheme, and/or broadcast scheme is used, one common ID may be used for transmission of the first signaling message indicating a request for transmission of inter-UE coordination information. The sequence used for the first signaling message (e.g. scrambling sequence, sequence for CRC masking) may be generated based on the common ID. The common ID may be configured by the UE-B or base station. The UE-B or base station may configure the common ID for unicast transmission, groupcast transmission, and broadcast transmission, and inform the common ID to the UE(s) by using at least one of higher layer signaling, MAC signaling, or PHY signaling. The UE-A(s) may obtain the common ID from the UE-B or the base station.

The UE-B(s) may perform a reception operation for the first signaling message by using the common ID, and determine whether to transmit inter-UE coordination information when the first signaling message requests transmission of inter-UE coordination information. The first signaling message transmitted using the common ID may further include a UE-specific ID, group-specific ID, and/or SL-specific ID that indicates a recipient (e.g. UE-A, UE group) of the first signaling message. The SL-specific ID may mean an ID configured for communication between the UE-B and recipient UE(s). The SL-specific ID may be an L2 groupcast ID.

The UE-A may identify the ID (e.g. UE-specific ID, group-specific ID, and/or SL-specific ID) included in the first signaling message, and when the identified ID corresponds to the ID configured to the corresponding UE-A, the UE-A may transmit a second signaling message including inter-UE coordination information to the UE-B in response to the first signaling message.

In the above-described exemplary embodiment, IDs (e.g. UE-specific ID, cell-specific ID, RP-specific ID, group-specific, ID, common ID, and/or SL-specific ID) may be configured to each UE using at least one of higher layer signaling, MAC signaling, or PHY signaling. In the above-described exemplary embodiment, a recipient (e.g. UE, UE group) of the first signaling message may not be specified. The recipient of the first signaling message may be specified as some or all of the UE(s) receiving data transmitted by the UE-B. Additionally, the recipient of the first signaling message may include UE(s) that do not receive data transmitted by the UE-B.

For example, the UE-B may transmit the first signaling message to a recipient of data transmitted from the UE-B in the unicast scheme or UE(s) other than the recipient. As in the exemplary embodiment of FIG. 8, the UE-B may transmit the same first signaling message (e.g. the same information of requesting transmission) in the groupcast scheme. In this case, each of the UE-A1 and UE-A2 may generate a second signaling message including inter-UE coordination information based on the same information of requesting transmission, and transmit the second signaling message.

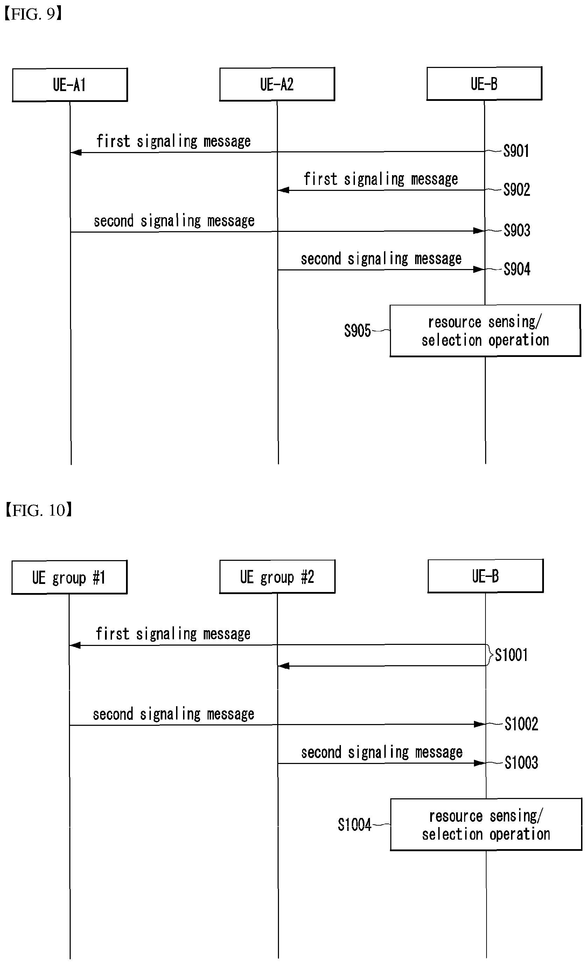

FIG. 9 is a sequence chart illustrating a third exemplary embodiment of a sidelink communication method.

As shown in FIG. 9, a communication system may include a UE-A1, UE-A2, and UE-B. The UE-B may transmit a first signaling message indicating a request for transmission of inter-UE coordination information to the UE-A1 (S901). The UE-B may transmit a first signaling message indicating a request for transmission of inter-UE coordination information to the UE-A2 (S902). In the steps S901 and S902, the first signaling messages may be transmitted in the unicast scheme. The first signaling messages in the steps S901 and S902 may include different transmission request information.

The UE-A1 may receive the first signaling message from the UE-B, generate a second signaling message including inter-UE coordination information #1 based on the transmission request indicated by the first signaling message, and transmit the second signaling message to the UE-B (S903). The UE-A2 may receive the first signaling message from the UE-B, generate a second signaling message including inter-UE coordination information #2 based on the transmission request indicated by the first signaling message, and transmit the second signaling message to the UE-B (S904). In the steps S903 and S904, the second signaling messages may be generated based on different transmission request information.

The UE-B may receive the second signaling message from the UE-A1 and identify the inter-UE coordination information #1 included in the second signaling message. The UE-B may receive the second signaling message from the UE-A2 and identify the inter-UE coordination information #2 included in the second signaling message. The UE-B may perform a resource sensing/selection operation based on the inter-UE coordination information #1 and/or inter-UE coordination information #2 (S905). The UE-B may perform sidelink communication using resources determined in the step S905.

The UE-B may independently generate the first signaling message for each UE-A. In this case, resource information included in the first signaling message for the UE-A1 may be different from resource information included in the first signaling message for the UE-A2. The resource information may include information on resources sensed by the UE-B, information on resources reserved by the UE-B for data transmission, and/or information on a range of sensing resources used for data transmission by the UE-B. The UE-A may determine preferred resources and/or non-preferred resources within the resources indicated by the resource information included in the first signaling message, and may transmit a second signaling message including inter-UE coordination information indicating the preferred resources and/or non-preferred resources to the UE-B.

In each of the first signaling messages transmitted to different UE-As, the inter-UE coordination scheme and requested information required for the inter-UE coordination scheme may be configured independently (e.g. differently). For example, when the first signaling message indicates the inter-UE coordination scheme 1 or when the first signaling message supports the inter-UE coordination scheme 1, the first signaling message may indicate a request for transmission of preferred resource information and/or non-preferred resource information according to the inter-UE coordination scheme 1. When the first signaling message indicates the inter-UE coordination scheme 2 or when the first signaling message supports the inter-UE coordination scheme 2, the first signaling message may indicate a request for transmission of expected/potential resource conflict information and/or detected resource conflict information according to the inter-UE coordination scheme 2.

In the above-described exemplary embodiment of FIG. 7, the first signaling message transmitted to each of the UE-A1 and UE-A2 may include different information element(s). For example, the inter-UE coordination scheme and/or the requested information required for the inter-UE coordination scheme in the first signaling message transmitted to the UE-A1 may be different from the inter-UE coordination scheme and/or the requested information required for the inter-UE coordination scheme in the first signaling message transmitted to the UE-A2. To support the above-described operations, the first signaling message may include indication information for distinguishing information element(s) transmitted to each UE-A.

Alternatively, the UE-B may transmit the first signaling message to some or all of the UE(s) receiving data transmitted by the UE-B in the groupcast scheme and/or the UE(s) not receiving data transmitted by the UE-B in the groupcast scheme.

FIG. 10 is a sequence chart illustrating a fourth exemplary embodiment of a sidelink communication method.

As shown in FIG. 10, a communication system may include a UE group #1, a UE group #2, and a UE-B. The UE group #1 may include one or more UE-As. The UE group #1 may include one or more UEs that receive data transmitted by the UE-B. The UE group #2 may include one or more UE-As. The UE group #2 may include one or more UEs that receive data transmitted by the UE-B and one or more UEs that do not receive data transmitted by the UE-B.

The UE-B may transmit a first signaling message to the UE group #1 and the UE group #2 in the groupcast scheme (S1001). The step S1001 may be one groupcast transmission. The first signaling message transmitted to the UE group #1 and UE group #2 may include the same information element(s). Alternatively, the first signaling message transmitted to each of the UE group #1 and the UE group #2 may include different information element(s). For example, the inter-UE coordination scheme and/or the requested information required for the inter-UE coordination scheme in the first signaling message transmitted to the UE group #1 may be different from the inter-UE coordination scheme and/or the requested information required for the inter-UE coordination scheme in the first signaling message transmitted to the UE group #2. To support the above-described operations, the first signaling message may include indication information for distinguishing information element(s) transmitted to each UE group.

The UE group #1 (e.g. UE(s) belonging to the UE group #1) may receive the first signaling message from the UE-B, and may transmit a second signaling message including inter-UE coordination information #1 to the UE-B in response to the first signaling message (S1002). The UE group #2 (e.g. UE(s) belonging to the UE group #2) may receive the first signaling message from the UE-B, and may transmit a second signaling message including inter-UE coordination information #2 to the UE-B in response to the first signaling message (S1003). The UE group #1 and UE group #2 may generate the second signaling message based on the same transmission request information included in the first signaling message.

The UE-B may receive the second signaling message from the UE group #1 and identify the inter-UE coordination information #1 included in the second signaling message. The UE-B may receive the second signaling message from the UE group #2 and identify the inter-UE coordination information #2 included in the second signaling message. The UE-B may perform a resource sensing/selection operation based on the inter-UE coordination information #1 and/or inter-UE coordination information #2 (S 1004). The UE-B may perform sidelink communication using the resources determined in the step S1004.

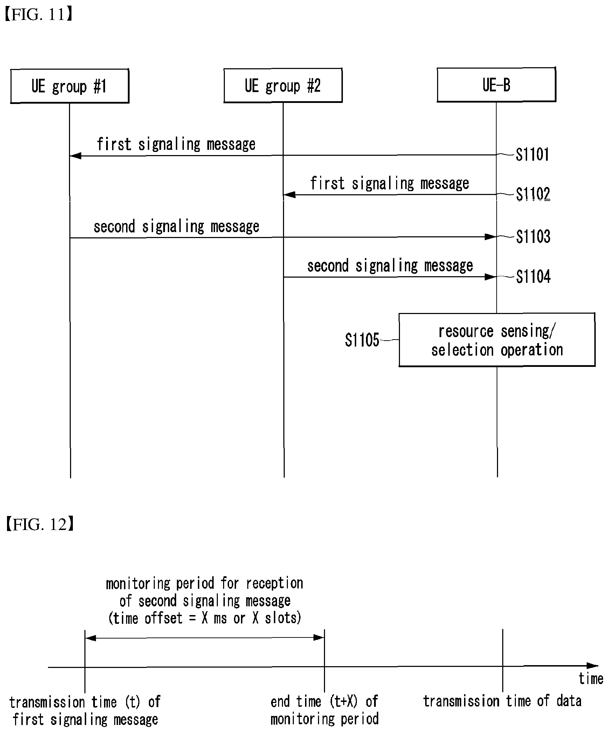

FIG. 11 is a sequence chart illustrating a fifth exemplary embodiment of a sidelink communication method.

As shown in FIG. 11, a communication system may include a UE group #1, a UE group #2, and a UE-B. The UE group #1 may include one or more UE-As. The UE group #1 may include one or more UEs that receive data transmitted by the UE-B. The UE group #2 may include one or more UE-As. The UE group #2 may include one or more UEs that receive data transmitted by the UE-B and one or more UEs that do not receive data transmitted by the UE-B.

The UE-B may transmit a first signaling message to the UE group #1 in the groupcast scheme (S1101). The UE-B may transmit a first signaling message to the UE group #2 in the groupcast scheme (S1102). The groupcast transmission in the step S1101 and the groupcast transmission in the step S1102 may each be performed independently. The transmission request information included in the first signaling message transmitted in the step S 1101 may be configured differently from the transmission request information included in the first signaling message transmitted in the step S1102.

For example, the UE-B may independently generate the first signaling message for each UE group. In this case, resource information included in the first signaling message for the UE group #1 may be different from resource information included in the first signaling message for the UE group #2. The resource information may include information on resources sensed by the UE-B, information on resources reserved by UE-B for data transmission, and/or information on a range of sensing resources used for data transmission by the UE-B.

In each of the first signaling messages transmitted to different UE-groups, the inter-UE coordination scheme and requested information required for the inter-UE coordination scheme may be configured independently (e.g. differently). For example, when the first signaling message indicates the inter-UE coordination scheme 1 or when the first signaling message supports the inter-UE coordination scheme 1, the first signaling message may indicate a request for transmission of preferred resource information and/or non-preferred resource information according to the inter-UE coordination scheme 1. When the first signaling message indicates the inter-UE coordination scheme 2 or when the first signaling message supports the inter-UE coordination scheme 2, the first signaling message may indicate a request for transmission of expected/potential resource conflict information and/or detected resource conflict information according to the inter-UE coordination scheme 2.

The UE group #1 (e.g. UE(s) belonging to the UE group #1) may receive the first signaling message from the UE-B, and may transmit a second signaling message including inter-UE coordination information #1 to the UE-B in response to the first signaling message (S1103). The UE group #2 (e.g. UE(s) belonging to the UE group #2) may receive the first signaling message from the UE-B, and may transmit a second signaling message including inter-UE coordination information #2 to the UE-B in response to the first signaling message (S1104). The UE group #1 and UE group #2 may generate the second signaling messages based on the different transmission request information included in the first signaling messages.

The UE-B may receive the second signaling message from the UE group #1 and identify the inter-UE coordination information #1 included in the second signaling message. The UE-B may receive the second signaling message from the UE group #2 and identify the inter-UE coordination information #2 included in the second signaling message. The UE-B may perform a resource sensing/selection operation based on the inter-UE coordination information #1 and/or inter-UE coordination information #2 (S1105). The UE-B may perform sidelink communication using the resources determined in the step S1105.

### [Transmission scheme of second signaling message]

In the above-described exemplary embodiments, the UE-A(s) receiving the first signaling message (e.g. a message requesting transmission of inter-UE coordination information) may operate as follows for transmission of inter-UE coordination information. The UE-A may transmit the second signaling message based on a transmission scheme #1 or transmission scheme #2 defined in Table 4 below.

**[Table 4]**

| | **Description** |
|---|---|
| Transmission scheme #1 | When inter-UE coordination information corresponding to information requested by the first signaling message exists, or when inter-UE coordination information corresponding to information requested by the first signaling message can be generated, the UE-A may transmit a second signaling message including the inter-UE coordination information. |
| Transmission scheme #2 | When specific condition(s) are satisfied, the UE-A may generate and/or transmit a second signaling message including inter-UE coordination information. |

The base station and/or UE-B may configure the UE(s) to use the transmission scheme #1 or transmission scheme #2 using at least one of higher layer signaling, MAC signaling, or PHY signaling. The UE (e.g. UE-A) may generate and transmit the second signaling message based on the transmission scheme configured by the base station and/or UE-B.

The transmission scheme of the second signaling message may be determined based on the cast type (e.g. unicast, groupcast, and/or broadcast) in which the first signaling message is transmitted. For example, the UE-A may determine the transmission scheme of the second signaling message based on Table 5 below.

**[Table 5]**

| **Cast type of the first signaling message** | **Transmission scheme** |
|---|---|
| Unicast or groupcast | Transmission scheme #1 |
| broadcast | Transmission scheme #1 |

The base station and/or UE-B may transmit the information in Table 5 to the UE(s) using at least one of higher layer signaling, MAC signaling, or PHY signaling. When a recipient of the first signaling message is explicitly indicated, the second signaling message may be transmitted based on the transmission scheme #1. When a recipient of the first signaling message is unspecified UE(s), the second signaling message may be transmitted based on the transmission scheme #2. In addition to the above-described exemplary embodiments, various combinations may be configured.

Specific condition(s) for the transmission scheme #2 may be indicated by the first signaling message. Alternatively, specific condition(s) for the transmission scheme #2 may be configured to the UE(s) using at least one of higher layer signaling, MAC signaling, or PHY signaling. For example, a specific condition for the transmission scheme #2 may be a zone type. The zone types may be distinguished according to a distance between the UE-A and the UE-B. The zone type according to the distance between the UE-A and the UE-B may be configured as shown in Table 6 below.

**[Table 6]**

| **Zone type** | **Distance between UE-A and UE-B** |
|---|---|
| Zone A | distance between UE-A and UE-B < 100m |
| Zone B | 100m ≤ distance between UE-A and UE-B < 500m |
| Zone C | 500m ≤ distance between UE-A and UE-B < 1km |

The base station and/or UE-B may transmit the information in Table 6 to the UE(s) using at least one of higher layer signaling, MAC signaling, or PHY signaling. In Table 6, the distance between the UE-A and the UE-B may mean a communication range. The UE-B may transmit a first signaling message including the zone type. For example, if the zone type included in the first signaling message indicates a zone A, among UE-As that receive the first signaling message, UE-A(s) belonging to the zone A may transmit a second signaling message including inter-UE coordination information. To support the above-described operations, the first signaling message may include location information of the UE-B transmitting the first signaling message. The UE-A may identify a zone type (e.g. zone A, zone B, or zone C) to which it belongs based on its location and the location of the UE-B indicated by the first signaling message. The information indicating the zone type and/or location information of the UE-B may be transmitted through a SCI and/or MAC CE for the first signaling message.

Alternatively, the zone types may be distinguished based on received signal strengths. The zone types according to the received signal strengths at the UE-A may be configured as shown in Table 7 below.

**[Table 7]**

| **Zone type** | Received signal strength at UE-A |
|---|---|
| Zone A | first threshold < received signal strength |
| Zone B | second threshold < received signal strength ≤ first threshold |
| Zone C | received signal strength < second threshold |

The base station and/or UE-B may transmit the information in Table 7 to the UE(s) using at least one of higher layer signaling, MAC signaling, or PHY signaling. The UE-A may measure a received signal strength of a signal and/or channel received from the UE-B, and may confirm a zone type to which the UE-A belongs based on the received signal strength. The received signal strength may be a received signal strength of the first signaling message.

FIG. 12 is a timing diagram illustrating a first exemplary embodiment of a data transmission method.

As shown in FIG. 12, a monitoring period for reception of the second signaling message may be configured. The monitoring period may be configured by a time offset, and the time offset may be set to X milliseconds (ms). X may be a natural number. The time offset may start from a time of transmitting the first signaling message. The UE-B may perform a reception operation (e.g. monitoring operation) of the second signaling message during the monitoring period corresponding to the time offset from the time of transmitting the first signaling message. For example, when the time of transmitting the first signaling message is t, the UE-B may perform a reception operation of the second signaling message during (t+X) ms.

The time offset may be set in units of time resources (e.g. symbols, slots, or subframes). For example, the time offset may be set as X slots. If the first signaling message is transmitted in a slot #K, the UE-B may perform a reception operation of the second signaling message in a time period from the slot #K (or slot #K+1) to a slot #K+X. K may be a natural number.

When the second signaling message is received in the above-described time period (e.g. monitoring period), the UE-B may perform a resource sensing/selection operation based on the inter-UE coordination information included in the second signaling message, and perform sidelink communication using a resource determined by the resource sensing/selection operation. If the second signaling message is not received in the above-described time period (e.g. monitoring period), the UE-B may perform sidelink communication without the second signaling message (i.e. without considering inter-UE coordination information).

The time offset (e.g. X ms or X slots) may be a value configured for reception and/or transmission of inter-UE coordination information (e.g. second signaling message) before transmitting data. The base station may transmit information on the monitoring period (e.g. time offset, X ms, or X slots) for reception and/or transmission of the second signaling message to the UE(s) by using at least one of higher layer signaling, MAC signaling, or PHY signaling. The UE(s) may receive the information (e.g. time offset, X ms, or X slots) of the monitoring period for reception and/or transmission of the second signaling message from the base station. A plurality of time offsets may be configured to the UE-B by at least one of higher layer signaling, MAC signaling, or PHY signaling, and the UE-B may use one time offset among the plurality of time offsets. For example, considering a time of transmitting data transmission, the UE-B may select one time offset from the plurality of time offsets.

When the UE-B transmits the first signaling message including information on resources reserved for data transmission or sensed resources, the time of transmitting data may be configured as a time point before a time resource used for the data transmission or a time resource available for the data transmission.

The first signaling message transmitted by the UE-B may include information on the time offset. Alternatively, information on the time offset may be transmitted to the UE-A(s) using at least one of higher layer signaling, MAC signaling, or PHY signaling. If transmission of the second signaling message is impossible within a period corresponding to the time offset from a time of receiving the first signaling message, the UE-A may not transmit the second signaling message including inter-UE coordination information. If transmission of the second signaling message is possible within a period corresponding to the time offset from a time of receiving the first signaling message, the UE-A may transmit a second signaling message including inter-UE coordination information.

The first signaling message may include information on a resource for transmission of the second signaling message. The information on the resource for transmission of the second signaling message may be configured as shown in Table 8 below.

**[Table 8]**

| | **Description** |
|---|---|
| Resource information #1 | PSFCH resource information |
| Resource information #2 | Sensed resource information |

When the first signaling message includes information on a PSFCH resource, the UE-A receiving the first signaling message may transmit the second signaling message including inter-UE coordination information using the PSFCH resource. The second signaling message may be transmitted based on an HARQ-ACK transmission scheme. When the second signaling message is transmitted through the PSFCH resource, information indicated by the second signaling message (e.g. inter-UE coordination information) may be configured as shown in Table 9 below. Acknowledgement (ACK) information may mean an ACK sequence or ACK bit. Negative ACK (NACK) information may mean a NACK sequence or NACK bit.

**[Table 9]**

| | **ACK information** | **NACK information** |
|---|---|---|
| Inter-UE coordination scheme 1 | Preferred resources | Non-preferred resources |
| Inter-UE coordination scheme 2 | Expected/potential resource conflict | Detected resource conflict |

The base station and/or UE-B may transmit the information in Table 9 to the UE(s) using at least one of higher layer signaling, MAC signaling, or PHY signaling. The PSFCH resources for transmission of the second signaling message may be a resource (e.g. time and/or frequency resource) configured for HARQ-ACK transmission for the first signaling message. Alternatively, the PSFCH resource for transmission of the second signaling message may be a resource (e.g. time and/or frequency resource) different from the resource configured for HARQ-ACK transmission for the first signaling message.

For example, when the first signaling message explicitly or implicitly indicates the inter-UE coordination scheme 1, if the resource information provided by the second signaling message is preferred resource information, the second signaling message may include ACK information. When the first signaling message explicitly or implicitly indicates the inter-UE coordination scheme 1, if the resource information provided by the second signaling message is non-preferred resource information, the second signaling message may include NACK information. When the first signaling message explicitly or implicitly indicates the inter-UE coordination scheme 2, if the resource information provided by the second signaling message is expected/potential resource conflict information, the second signaling message may include ACK information. When the first signaling message explicitly or implicitly indicates the inter-UE coordination scheme 2, if the resource information provided by the second signaling message is detected resource conflict information, the second signaling message may include NACK information.

The exemplary embodiment in Table 9 may be applied only to a specific inter-UE coordination scheme. For example, the second signaling message (e.g. inter-UE coordination information) indicating preferred resource information or non-preferred resource information according to the inter-UE coordination scheme 1 may not be transmitted through a PSFCH resource. In this case, the exemplary embodiment in Table 9 may be applied only to the inter-UE coordination scheme 2.

As shown in the exemplary embodiment in Table 10 below, the first signaling message may explicitly or implicitly indicate the inter-UE coordination scheme 2. In this case, if the resource information provided by the second signaling message is expected/potential resource conflict information, the second signaling message may include ACK information. Alternatively, if the resource information provided by the second signaling message is detected resource conflict information, the second signaling message may include NACK information.

**[Table 10]**

| | **ACK information** | **NACK information** |
|---|---|---|
| Inter-UE coordination scheme 2 | Expected/potential resource conflict | Detected resource conflict |

If the first signaling message includes information on a PSFCH resource (e.g. resource information #1), the first signaling message may implicitly indicate the inter-UE coordination scheme 2. The exemplary embodiment of Table 10 may be applied to a specific inter-UE coordination scheme and specific inter-UE coordination information requested by the specific inter-UE coordination scheme.

The first signaling message may explicitly or implicitly indicate 'the inter-UE coordination scheme 2 and a request for expected/potential resource conflict information' or 'the inter-UE coordination scheme 2 and a request for detected resource conflict information'. In this case, whether a conflict (e.g. expected/potential resource conflict and/or detected resource conflict) occurs may be indicated based on Table 11 or Table 12 below.

**[Table 11]**

| | **Conflict occurs** | **Conflict does not occur** |
|---|---|---|
| Inter-UE coordination scheme 2 | NACK information | ACK information |

**[Table 12]**

| | **Conflict occurs** | **Conflict does not occur** |
|---|---|---|
| Inter-UE coordination scheme 2 | NACK information | No transmission |

In the exemplary embodiment of Table 11, when a conflict occurs (e.g. when resource conflict information exists), the UE-A may transmit a second signaling message including NACK information using the PSFCH resource. In the exemplary embodiment of Table 11, when no conflict occurs (e.g. when resource conflict information does not exist), the UE-A may transmit a second signaling message including ACK information using the PSFCH resource.

In the exemplary embodiment of Table 12, when a conflict occurs (e.g. when resource conflict information exists), the UE-A may transmit a second signaling message including NACK information using the PSFCH resource. In the exemplary embodiment of Table 12, when no conflict occurs (e.g. resource conflict information does not exist), the UE-A may not perform transmission (e.g. transmission of a second signaling message).

In the exemplary embodiment of Table 12, it may be configured that different ACK/NACK information is transmitted according to inter-UE coordination information requested by the inter-UE coordination scheme 2. For example, as shown in the exemplary embodiment in Table 13 below, when the first signaling message requests expected/potential resource conflict information, if an expected/potential resource conflict occurs, the UE-A may transmit a second signaling message including NACK information. When an expected/potential resource conflict does not occur, the UE-A may not perform the transmission (e.g. transmission of a second signaling message).

**[Table 13]**

| | **Conflict occurs** | **Conflict does not occur** |
|---|---|---|
| Expected/potential resource conflict | NACK information | No transmission |
| Detected resource conflict | ACK information | No transmission |

When the first signaling message requests detected resource conflict information, if a detected resource conflict occurs, the UE-A may transmit a second signaling message including ACK information. If a detected resource conflict does not occur, the UE-A may not perform transmission (e.g. transmission of a second signaling message)

The first signaling message may not explicitly indicate a request for transmission of expected/potential resource conflict information and/or detected resource conflict information for the inter-UE coordination scheme 2. In this case, the UE-A receiving the first signaling message may select information that can be provided among expected/potential resource conflict information and detected resource conflict information, and transmit a second signaling message including the selected information. In this case, the second signaling message may indicate expected/potential resource conflict information or detected resource conflict information according to the exemplary embodiment in Table 13. The above-described operations may be applied identically or similarly to an exemplary embodiment according to the inter-UE coordination scheme 1.

When the first signaling message is transmitted in the groupcast scheme, UE(s) belonging to a UE group receiving the first signaling message may transmit second signaling message(s) using the same PSFCH resource. In this case, if the exemplary embodiment of Table 12 is applied, the first signaling message may explicitly or implicitly indicate 'the inter-UE coordination scheme 2 and a request of expected/potential resource conflict information' or 'the inter-UE coordination scheme 2 and a request of detected resource conflict information', the UE-A may transmit a second signaling message including NACK information using a PSFCH resource when a conflict indicated by the first signaling message occurs, and the UE-A may transmit a second signaling message including ACK information using a PSFCH resource when a conflict indicated by the first signaling message does not occur.

Each UE-A belonging to the UE group may determine whether a conflict indicated by the first signaling message occurs. If a conflict occurs in one UE-A, the corresponding UE-A may transmit a second signaling message including NACK information to the UE-B using a PSFCH resource. The UE-B may receive the second signaling message from the UE-A belonging to the UE group, and may determine that a conflict indicated by the first signaling message occurs based on the NACK information included in the second signaling message.

The same first signaling message or different first signaling messages may be transmitted to a plurality of UE-As. In this case, when the same first signaling message or different first signaling messages include information on the same PSFCH resource, a plurality of second signaling messages may be transmitted using one PSFCH resource (e.g. the same PSFCH resource).

The first signaling message may include information on a sensed resource (e.g. resource information #2 defined in Table 8) instead of a PSFCH resource. In this case, UE-A(s) receiving the first signaling message may select a resource based on the information on the sensed resource included in the first signaling message. Alternatively, the UE-A(s) may select a resource by performing a resource sensing operation again. The UE-A(s) may transmit a second signaling message using the selected resource. The information on the sensed resource may be information on a dedicated resource for transmission of the second signaling message. The information on the sensed resource may be information on a target resource for requesting inter-UE coordination information.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. A method of a first user equipment (UE), comprising:
generating a first signaling message including a first information element indicating a transmission request for inter-UE coordination information;
transmitting the first signaling message;
performing a reception operation of a second signaling message including the inter-UE coordination information during a first time period from a time of transmitting the first signaling message; and
in response to receiving the second signaling message, performing sidelink communication in consideration of the inter-UE coordination information included in the second signaling message,
wherein when the second signaling message is not received during the first time period, the sidelink communication is performed without considering the inter-UE coordination information.

2. The method according to claim 1, wherein the first signaling message is transmitted in a unicast scheme, a groupcast scheme, or a broadcast scheme, the first signaling message is generated based on a UE-specific identifier (ID) when the first signaling message is transmitted in the unicast scheme, the first signaling message is generated based on a group-specific ID when the first signaling message is transmitted in the groupcast scheme, and the first signaling message is generated based on an ID for broadcast transmission when the first signaling message is transmitted in the broadcast scheme.

3. The method according to claim 1, wherein the first signaling message further includes information on a time offset indicating the first time period.

4. The method according to claim 1, further comprising: receiving information on a time offset indicating the first time period from a base station to which the first UE is connected.

5. The method according to claim 1, wherein the first signaling message is transmitted to each of a second UE and a third UE, and the first signaling message transmitted to the second UE and the first signaling message transmitted to the third UE include same information elements or different information elements.

6. The method according to claim 1, wherein the first signaling message further includes a second information element indicating a transmission scheme of the second signaling message including the inter-UE coordination information.

7. The method according to claim 6, wherein the transmission scheme is classified into a first transmission scheme and a second transmission scheme, the second signaling message is transmitted if the inter-UE coordination information exists when the first transmission scheme is used, and the second signaling message is transmitted if a preconfigured condition is satisfied when the second transmission scheme is used.

8. The method according to claim 7, wherein the preconfigured condition is a condition in which a distance between the first UE and a second UE receiving the first signaling message is less than a first threshold, or a condition in which a received strength of the first signaling message received at the second UE is greater than or equal to a second threshold.

9. The method according to claim 1, wherein the first signaling message further includes a third information element indicating a transmission resource of the second signaling message, and the transmission resource is a physical sidelink feedback channel (PSFCH) resource or a resource sensed by the first UE.

10. The method according to claim 9, wherein when the second signaling message is transmitted using the PSFCH resource, the second signaling message includes acknowledgment (ACK) information or negative ACK (NACK) information, and each of the ACK information and the NACK information indicates preferred resources, non-preferred resources, expected/potential resource conflict, or detected resource conflict indicated by the first signaling message.

11. A method of a second user equipment (UE), comprising:
receiving, from a first UE, a first signaling message including a first information element indicating a transmission request for inter-UE coordination information and a second information element indicating a transmission scheme of the inter-UE coordination information;
in response to satisfying a condition according to the transmission scheme, generating the inter-UE coordination information according to the transmission request; and
transmitting, to the first UE, a second signaling message including the inter-UE coordination information.

12. The method according to claim 11, wherein the condition is a condition in which a distance between the first UE and the second UE is less than a first threshold, or a condition in which a received strength of the first signaling message is equal to or greater than a second threshold.

13. The method according to claim 11, wherein the first signaling message further includes a third information element indicating a transmission resource of the second signaling message, and the transmission resource is a physical sidelink feedback channel (PSFCH) resource or a resource sensed by the first UE.

14. The method according to claim 13, wherein when the second signaling message is transmitted using the PSFCH resource, the second signaling message includes acknowledgment (ACK) information or negative ACK (NACK) information, and each of the ACK information and the NACK information indicates preferred resources, non-preferred resources, expected/potential resource conflict, or detected resource conflict indicated by the first signaling message.

15. The method according to claim 11, wherein the first signaling message further includes information on a time offset, and the second signaling message is transmitted within a time period corresponding to the time offset from a time of receiving the first signaling message.

16. The method according to claim 11, wherein the first signaling message is transmitted in a unicast scheme, a groupcast scheme, or a broadcast scheme, the first signaling message is received based on a UE-specific identifier (ID) when the first signaling message is transmitted in the unicast scheme, the first signaling message is received based on a group-specific ID when the first signaling message is transmitted in the groupcast scheme, and the first signaling message is received based on an ID for broadcast transmission when the first signaling message is transmitted in the broadcast scheme.

17. A first user equipment (UE) comprising:
a processor; and
a memory storing one or more instructions executable by the processor,
wherein the one or more instructions are executed to perform:
generating a first signaling message including a first information element indicating a transmission request for inter-UE coordination information;
transmitting the first signaling message;
performing a reception operation of a second signaling message including the inter-UE coordination information during a first time period from a time of transmitting the first signaling message; and
in response to receiving the second signaling message, performing sidelink communication in consideration of the inter-UE coordination information included in the second signaling message,
wherein when the second signaling message is not received during the first time period, the sidelink communication is performed without considering the inter-UE coordination information.

18. The first UE according to claim 17, wherein information on a time offset indicating the first time period is included in the first signaling message or is configured by a base station to which the first UE is connected.

19. The first UE according to claim 17, wherein the first signaling message further includes a second information element indicating a transmission scheme of the second signaling message including the inter-UE coordination information, the transmission scheme is classified into a first transmission scheme and a second transmission scheme, the second signaling message is transmitted if the inter-UE coordination information exists when the first transmission scheme is used, and the second signaling message is transmitted if a preconfigured condition is satisfied when the second transmission scheme is used.

20. The first UE according to claim 17, wherein the first signaling message further includes a third information element indicating a transmission resource of the second signaling message, the transmission resource is a physical sidelink feedback channel (PSFCH) resource or a resource sensed by the first UE, and when the second signaling message is transmitted using the PSFCH resource, the second signaling message includes acknowledgment (ACK) information or negative ACK (NACK) information, and each of the ACK information and the NACK information indicates preferred resources, non-preferred resources, expected/potential resource conflict, or detected resource conflict indicated by the first signaling message.
